# EUROPEAN PATENT APPLICATION

(11) **EP 4 708 051 A1**
(43) Date of publication of application: **11.03.2026**
(21) Application number: 24306476.3
(22) Date of filing: 10.09.2024
(51) Int. Cl.: G06F 11/07, B60W 50/02, G06N 20/00

(54) **METHOD FOR DIAGNOSING A MALFUNCTION OF A PIECE OF EQUIPMENT**

(71) Applicant: THALES, 92190 Meudon (FR)
(72) Inventor: HALLE, Simon, Quebec, G1P 4P5 (CA)
(74) Representative: Lavoix

(57) **Abstract**

Method for diagnosing a malfunction of an equipment, the method being implemented by an electronic device and comprising:
- acquisition (100) of input data comprising information relating to the malfunction of the equipment,
- applying (200) a first model to the input data to obtain an hypothesis including a solution of the malfunction, said first model being trained to determine the hypothesis about the malfunction based on such input data,
- applying (300) a second model to the hypothesis to obtain a plurality of retrieval facts from a knowledge base containing historical data about the malfunction of the equipment,
- determining (400) a valid hypothesis by applying a third model to the hypothesis and the retrieval facts, said third model being trained to determine whether a hypothesis is valid,
- sending (500) a display control for displaying the valid hypothesis for diagnosis of the malfunction of the equipment.

## Description

### TECHNICAL FIELD

The present invention relates to a method for diagnosing a malfunction of a piece of equipment; as well as a computer program comprising software instructions which, when executed by a computer, implement such a diagnostic method.

The present invention also relates to an electronic diagnostic device implementing such a method.

### BACKGROUND

In modern industrial and manufacturing environments, the efficiency and reliability of equipment are paramount to maintaining productivity and minimize downtime. Despite advances in technology and maintenance practices, piece of equipment malfunctions are inevitable.

Traditional approaches to resolving equipment malfunctions often involve manual troubleshooting by skilled technicians, which can be time-consuming, costly, and prone to human error.

The advent of Industry and the integration of Internet of Things (IoT) technologies into manufacturing processes have highlighted the potential for more sophisticated, automated solutions to these challenges.

The document *"*Towards End-to-End Embodied Decision Making via Multi-modal Large Language Model: Explorations with GPT4-Vision and Beyond. " (arXiv preprint arXiv:2310.02071*)* describes a method for automating a task to resolve a malfunction.

However, said method requires a user to instruct the model as to what it is expected to resolve and train the model appropriately. Thus, such a method is limited by the user's knowledge of the malfunction.

### SUMMARY

There is, therefore, a need for a method and related electronic device enabling for diagnosing a malfunction of a piece of equipment that is independent of the user's knowledge.

To this end, the invention concerns a method for diagnosing a malfunction of a piece of equipment, the method being implemented by an electronic diagnostic device and comprising:
- acquisition of an input data, said input data comprising information relating to the malfunction of the piece of equipment,
- applying a first model to the input data to obtain at least one hypothesis including a solution of the malfunction, said first model being trained to determine at least one hypothesis about the malfunction based on such input data,
- applying a second model to the at least one hypothesis to obtain a plurality of retrieval facts from a knowledge base containing historical data about the malfunction of the piece of equipment,
- determining at least one valid hypothesis by application of a third model to the at least one hypothesis and the retrieval facts, said third model being trained to determine whether a hypothesis is valid,
- sending a display control to a display for displaying the at least one valid hypothesis for the diagnosis of the malfunction of the piece of equipment by an operator.

According to advantageously aspects, the method comprises one or more of the following features, taken individually or in any technically possible combination:
- at least one hypothesis includes information about the piece of equipment and/or the malfunction.
- the first model uses the knowledge base to provide the at least one hypothesis when the acquired input data is similar to a historical input data stored in the knowledge base.
- the input data include measurements made by a sensor, said sensor being configured to measure a physical variable associated with the piece of equipment.
- the method further comprises a recommendation step wherein a relevance index is calculated for the at least one valid hypothesis, said relevance index being calculated by a recommendation algorithm and then displayed on the display.
- during the recommendation step, a recommendation plan is generated from a fourth model distinct from the first, second and third models and then displayed on the display.
- the method further comprises sending a control command to the piece of equipment according to the at least one valid hypothesis.
- the piece of equipment is an autonomous vehicle and the malfunction is a deviation of a physical parameter associated with the vehicle, such as speed or heading.

The invention also relates to a computer program including software instructions which, when executed by a computer, implement a method for diagnosing a malfunction of a piece of equipment, as defined above.

The invention further concerns an electronic diagnostic device for a piece of equipment malfunction comprising:
- an acquisition module configured to acquire an input data, said input data comprising information relating to the malfunction of the piece of equipment,
- a first application module configured to apply a first model to the input data to obtain at least one hypothesis including a solution of the malfunction, said first model being trained to determine at least one hypothesis about the malfunction based on such input data,
- a second application module configured to apply a second model to the at least one hypothesis to obtain a plurality of retrieval facts from a knowledge base containing historical data about the malfunction of the piece of equipment,
- a determination module configured to determine at least one valid hypothesis by application of a third model to the at least one hypothesis and the retrieval facts, said third model being trained to determine whether a hypothesis is valid,
- a sending module configured to send a display control to a display for displaying the at least one valid hypothesis for the diagnosis of the malfunction of the piece of equipment by an operator.

### BRIEF DESCRIPTION OF THE DRAWINGS

The invention will be easier to understand in view of the following description, provided solely as an example and with reference to the appended drawings in which:
[Fig.1] Figure 1 is a schematic representation of a piece of equipment presenting a malfunction diagnosed by an electronic diagnostic device according to the invention,
[Fig.2] Figure 2 is a flow chart of a method for diagnosing a malfunction of the piece of equipment implemented by the diagnostic device of Figure 1, and
[Fig.3] Figure 3 is a schematic representation of a knowledge base used by the diagnostic device of Figure 1.

### DETAILED DESCRIPTION

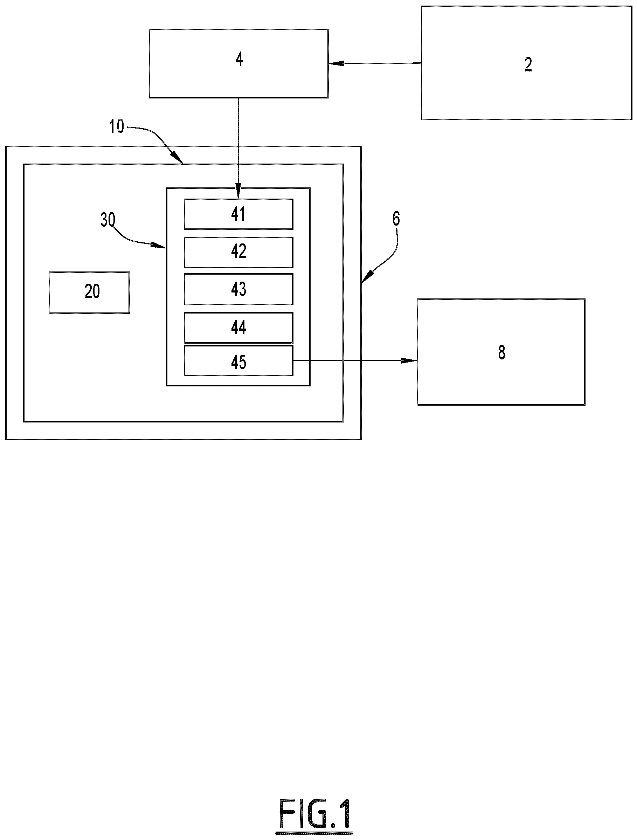

Figure 1 represents a piece of equipment 2, a sensor 4, an electronic diagnostic device 6 and a display 8.

The piece of equipment 2 is one or more parts of an equipment. For example, the equipment is a mechanical or electronic system. More particularly, if the equipment is an electronic system, the piece of equipment 2 may refer to a software and/or hardware part of said system.

In the following description, the piece of equipment 2 is subject of a malfunction.

A malfunction is defined as an abnormal behavior of the piece of equipment 2 that could prevent or hinder the proper operation of the equipment.

For example, the malfunction in a mechanical system may be the absence of a part, a break or a deformation.

For example, the malfunction in a hardware system may be worn electronic connections, a break or an excessive temperature.

For example, the malfunction in a software system may be a data corruption, an excessive calculation time or a lack of response.

The sensor 4 is typically a sensor of physical variables such as speed, temperature, acceleration, pressure, etc.

In this example, the sensor 4 is configured to measure one or more physical variables associated with the piece of equipment 2 and to generate data associated these measures.

In addition, the sensor 4 is configured to transmit measured data via a wired and/or remote connection.

Optionally, the sensor 4 is included in the piece of equipment 2 or in the diagnostic device 6.

The diagnostic device 6 is an electronic device configured to acquire an input data from the sensor 4 and diagnose the malfunction of the piece of equipment 2.

The diagnostic device 6 comprises one or more electronic components such as: one or more single or multi-core processors collectively represented by a processor, one or more graphics processing units (GPU), a solid-state drive, a random access memory (RAM), a display interface or an input/output interface. It will be appreciated that the diagnostic device 6 may for example be implemented as a desktop computer, a computer onboard a vehicle, a tablet, a smart phone and the like.

The diagnostic device 6 comprises an information-processing unit 10, formed for example by a processor 20, and an electronic memory 30 associated with the processor 20.

The diagnostic device 6 comprises an acquisition module 41, a first application module 42, a second application module 43, a determination module 44 and a sending module 45.

The acquisition module 41 is configured to acquire an input data from said input data comprising information relating to the malfunction of the piece of equipment 2.

The first application module 42 is configured to apply a first model to the input data to obtain at least one hypothesis including a solution of the malfunction, said first model being trained to determine the at least one hypothesis about the malfunction based on such input data.

The second application module 43 is configured to apply a second model to the at least one hypothesis to obtain a plurality of retrieval facts from a knowledge base containing historical data about the malfunction of the piece of equipment. The second model is distinct and separate from the first model.

The determination module 44 is configured to determine at least one valid hypothesis by application of a third model to the at least one hypothesis and the retrieval facts, said third model being trained to determine whether a hypothesis is valid. The third model is distinct and separate from the first and second models.

The sending module 45 is configured to send a display control to the display 8 for displaying the at least one valid hypothesis for the diagnosis of the malfunction of the piece of equipment 2 by the operator.

For example, the acquisition module 41, the first application module 42, the second application module 43, the determination module 44 and the sending module 45 are implemented in the form of software or a software brick, executable by the processor 20. The memory 30 is then able to store acquisition software, first application software, second application software determination software and sending software and the processor is configured to execute any one of these acquisition, first application, second application, determination and sending software.

In a variant not shown, the acquisition module 41, the first application module 42, the second application module 43, the determination module 44 and the sending module 45 are realized in the form of a programmable logic component, such as an FPGA (Field Programmable Gate Array), or in the form of an integrated circuit, such as an ASIC (Application Specific Integrated Circuit).

The display 8 is an electronic device configured to display images and/or data in response to the display control.

Optionally, the display 8 is included in the diagnostic device 6.

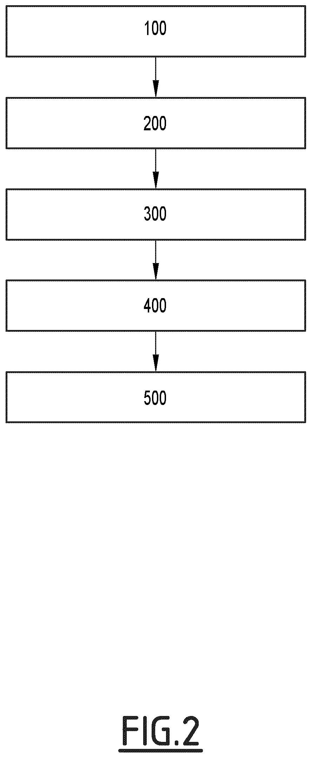

The operation of the diagnostic device 6 is now described with reference to figure 2, which illustrates an example of the implementation of a diagnosing method for diagnosing a malfunction of the piece of equipment 2.

This diagnosing method comprises an acquisition step 100, a first application step 200, a second application step 300, a determination step 400, a sending step 500 and a diagnosis step 600.

In the acquisition step 100, the diagnosis device 6 acquires input data.

The input data comprise information and/or technical description relating to the malfunction of the piece of equipment 2.

For example, the input data include measurements made by the sensor 2.

In another example, the input data is a semi structured numerical object and includes problem data, replication data or affect data.

Problem data relate to observations and/or explications about the malfunction.

Replication data relate to a context of the malfunction or stages during which the malfunction occurs.

Affect data relate to the piece of equipment 2 and, for example, its reference, version or function in the equipment.

The input data are received from sensor 2 in digital format such as pdf (Portable Document Format), Open XML or text.

In addition, the input data include measurements made by the sensor 2. Typically, said sensor is configured to measure a physical variable associated with the piece of equipment 2.

In the first application step 200, the diagnosis device 6 applies the first model to the input data to obtain the at least one hypothesis.

The first model has been trained to determine the at least one hypothesis about the malfunction based on such input data.

Thus, the first model receives, as input, the input data and delivers, as output, the at least one hypothesis.

Each one of the first model, the second model and the third model is a machine-learning model, i.e. a mathematical representation or algorithm that is trained on a set of data to recognize patterns, make predictions, or take decisions without being explicitly programmed for a specific task.

There are several types of machine learning models, such as supervised, unsupervised, semi-supervised and reinforcement.

A supervised model is a type of machine learning model that is trained on a labeled dataset, meaning that each training example is paired with an output label.

Typically, supervised models are classification or regression models.

Non-limiting examples of classification models include Perceptrons, Naive Bayes, Decision Tree, Logistic Regression, K-Nearest Neighbors, Artificial Neural Networks (ANN)/Deep Learning (DL), Support Vector Machines (SVM), and ensemble methods such as Random Forest, Bagging, AdaBoost, and the like.

Non-limiting examples of regression model include: Artificial Neural Networks (ANN) / Deep Learning (DL), Support Vector Machines (SVM), Linear Regression, Ordinary 25 Least Squares Regression (OLSR), Stepwise Regression, Multivariate Adaptive Regression, Splines (MARS), and Locally Estimated Scatterplot Smoothing (LOESS).

An unsupervised model is a type of machine learning model that is used to draw inferences from datasets consisting of input data without labeled responses.

Typically, unsupervised models are clustering models, dimensionality reduction models, association models, anomaly detection models or topic modeling models.

For example, the first model is a large language model (LLM). LLM is a type of semi-supervised model designed to understand and generate human language and combining supervised and unsupervised learning techniques. These models are typically based on deep learning architectures, such as the Transformer, and are trained on vast amounts of text data.

The training of the first model is typically semi-supervised. For example, it is first trained on an unlabeled database and then refined on a labeled database.

These databases include hypothesis, problem, reusing test cases and historical problem cases.

More specially, historical and factual associations that have been made between test and problem causes, observations and solutions. The training dataset generation will therefore generate "training cases" for each documented associations between test and problem elements, such as a "test applicable to a problem observation".

Training on the unlabeled database teaches the language structures of the at least one hypothesis.

Training on the labeled database teaches the first model how to associate input data with an expected hypothesis.

As an optional complement, the first model is self-supervised and trained to generate its own labels applied to the unlabeled database and self-train on the new labeled database.

Finally, the first model can be trained by reinforcement and the results (at least one hypothesis) of said first model are refined according to positive or negative feedback from the operator in order to improve its performance over time.

For example, the at least one hypothesis includes information about the piece of equipment 2 and/or the malfunction.

For example, the at least one hypothesis is a semi-structured object and includes problem data, cause data, replication data, affects data or resolution data.

The cause data relating to the source of the malfunction

The resolution data relating to solutions to the malfunction and may include an electronic command or an action to be carried out.

Typically, data can be extracted from the input data, such as the problem data, the replication data and the affects data.

In the second application step 300, the diagnosis device 6 applies the second model to the at least one hypothesis to obtain a plurality of retrieval facts.

Thus, the second model receives, as input, the at least one hypothesis and delivers, as output, the plurality of retrieval facts.

A retrieval fact is a numerical data directly related to the at least one hypothesis.

For example, the retrieval fact is an information about the resolution of a malfunction similar to the malfunction of the piece of equipment 2, said similar malfunction having been corrected in the past.

For example, the second model is an information retrieval engine configured to obtain the plurality of retrieval facts from the knowledge base containing historical data about the malfunction of the piece of equipment.

The knowledge base is a centralized repository for information, which can be used to store, organize, and retrieve knowledge. It serves as a crucial component in various domains, including artificial intelligence, customer support, and organizational learning.

The knowledge base is built by creating links between several system-engineering artefacts and can be generated by an artificial intelligence model.

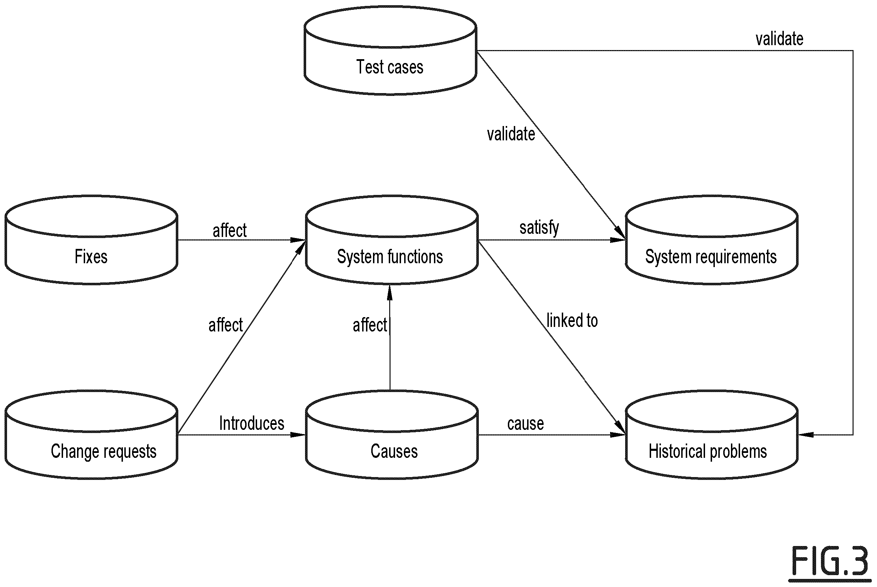

Figure 3 is a schematic representation of an example of the knowledge base that the second model may use. In this example, seven system-engineering artefacts were generated: system requirement, test cases, historical problem, function description, change request, historical fix.

The system-engineering artefacts are linked by the following links: validate, satisfy, linked to, cause, affect, introduces.

In this way, the second model provides access to related information and leads to a number of hypotheses about the malfunction.

For example, the second model is trained by reinforcement or semi-supervised training on a database containing a plurality of knowledge bases.

As an optional complement, the first model uses the knowledge base to provide the at least one hypothesis when the acquired input data is similar to a historical input data stored in the knowledge base.

In the determination step 400, the diagnosis device 6 determines at least one valid hypothesis by application of the third model to the at least one hypothesis and the retrieval facts.

A valid hypothesis is one that has direct retrieval fact associated with it.

The third model has been trained to determine whether a hypothesis is valid. For example, the third model is a large language model.

Thus, the third model receives, as input(s), the at least one hypothesis and/or retrieval facts and delivers, as output, the at least one valid hypothesis.

The third model acts as an expert, which exploits factual references found in the engineering artefacts to judge whether a hypothesis is, build on valid, tangible references and reasoning, and can therefore be used as a valid solution to be recommended.

For example, the third model is trained by using expert references in the knowledge base.

A valid hypothesis is a hypothesis that have direct, concrete supporting facts, including historical examples of the same hypotheses or a hypothesis that have supporting facts without direct supporting evidence for the same problem or context, which typically include a relevance index and therefore uncertainty

An invalidated hypothesis is a hypothesis with no direct fact associated with it.

By removing invalid hypothesis, this method ensures that hypothesis for the diagnostic (returned in the next step) are valid.

In the sending step 500, the diagnosis device 6 sends the respective display control to the display 8 for displaying the at least one valid hypothesis for the diagnosis of the malfunction of the piece of equipment 2 by the operator.

The display control is an electrical signal with display instructions for the display 8 to display a required image or data.

Typically, the operator will then be able to act further to the at least one valid hypothesis.

More specifically, the operator will have access to a hypothesis on the cause and/or resolution of the malfunction of the piece of equipment 2.

In this way, such a method makes it possible to diagnose a malfunction in a piece of equipment independently of the operator's knowledge, i.e. the user's knowledge.

The process described above can be implemented in other ways.

For example, the steps can be implemented in a different order or in parallel where technically possible.

According to another example, the method further comprises a recommendation step wherein the relevance index is calculated for the at least one valid hypothesis and then displayed on the display 8.

Typically, a recommendation algorithm calculates the relevance index.

If a solution exists as the facts associated with the at least one valid hypothesis, the relevance index rises sharply.

If the at least one valid hypothesis includes a solution, the relevance index increases.

The relevance index can also be displayed on the display 8 to allow the operator to choose between several displayed hypotheses.

As an alternative, a recommendation plan is generated from a fourth model distinct from the first, second and third models and then displayed on the display 8.

The fourth model takes the at least one valid hypothesis with the higher relevance index and outputs the recommendation plan.

For example, the recommendation plan is a structured text presenting, for example, the valid hypothesis, the cause, the solution and/or the associated test.

For example, the fourth model is a large language model.

In this example, the fourth model is trained in a similar way to the first model on separate databases.

This fourth model then enables to propose a clear and understandable recommended plan to the operator.

According to another example, the method further comprises sending a control command to the piece of equipment 2 according to the at least one valid hypothesis.

In response to the control command, the piece of equipment 2 is configured to correct the malfunction.

If the piece of equipment 2 is a mechanical system, an external device is configured to intervene and correct the malfunction in response to the control command.

This additional step automatically corrects the malfunction of a piece of equipment 2 without operator intervention, saving time and improving precision.

For example, the piece of equipment 2 is an autonomous vehicle and the malfunction is a deviation of a physical parameter associated with the vehicle 2.

For example, the physical parameter is the speed or heading of the autonomous vehicle.

### EXAMPLE: FLIGHT MANAGEMENT SYSTEM (FMS)

An example in which the diagnosis device 6 is a flight management system is now described.

In this example, the diagnostic device 6 is included in a pilot-driven aircraft.

The pilot can communicate textual information to the diagnostic device 6 via an interface (not shown on figure 1) connected to the diagnostic device and observes that the aircraft's speed is too high following a change of route.

The pilot then transmits an input data to the diagnostic device 6 via a string such as "wrong speed calculation" by adding a context such as "alternate trip added".

In the acquisition step 100, the diagnostic device 6 acquires the input data.

During the first application step 200, the diagnostic device 6 applies the first model on the input data to obtain the at least one hypothesis.

In this example, two hypotheses are obtained.

A first hypothesis is that the speed computing of the aircraft is using the weather data from the alternate trip.

A second hypothesis is that the whole trip recommendation from the alternate trip is being used instead of the current trip.

During the second application step 300, the diagnosis device 6 applies the second model to both hypotheses to obtain a plurality of retrieval facts.

In this example, the diagnosis device 6 generates a plurality of retrieval facts for both hypotheses.

For the first hypothesis, the associated retrieval facts are a historical problem about an AC speed miscalculation caused by wind from the alternate trip being used, a description of the speed calculation function and a function that uses wind data.

For the second hypothesis, the associated retrieval facts are a historical problem about the current trip recommendation overridden by the alternate trip destination airport, a description of the trip recommendation update function and a test that verifies that the default trip recommendation.

In the determination step 400, the diagnosis device 6 determine at least one valid hypothesis by applying the third model to both hypotheses.

For example, the diagnosis device determines the first hypothesis as valid.

In the sending step 500, the diagnosis device 6 sends the display control to the display 8 for displaying the first hypothesis for the pilot who can act accordingly.

During the optional recommendation step, the diagnosis device 6 sends, for example, the cause, solution and test associated with the first hypothesis in the form of a recommendation plan.

## Claims

1. Method for diagnosing a malfunction of a piece of equipment (2), the method being implemented by an electronic diagnostic device (6) and comprising:
- acquisition (100) of an input data, said input data comprising information relating to the malfunction of the piece of equipment (2),
- applying (200) a first model to the input data to obtain at least one hypothesis including a solution of the malfunction, said first model being trained to determine at least one hypothesis about the malfunction based on such input data,
- applying (300) a second model to the at least one hypothesis to obtain a plurality of retrieval facts from a knowledge base containing historical data about the malfunction of the piece of equipment (2),
- determining (400) at least one valid hypothesis by application of a third model to the at least one hypothesis and the retrieval facts, said third model being trained to determine whether a hypothesis is valid,
- sending (500) a display control to a display (8) for displaying the at least one valid hypothesis for the diagnosis of the malfunction of the piece of equipment (2) by an operator.

2. Method according to claim 1, wherein the at least one hypothesis includes information about the piece of equipment (2) and/or the malfunction.

3. Method according to any one of the preceding claims, wherein the first model uses the knowledge base to provide the at least one hypothesis when the acquired input data is similar to a historical input data stored in the knowledge base.

4. Method according to any one of the preceding claims, wherein the input data include measurements made by a sensor (4), said sensor (4) being configured to measure a physical variable associated with the piece of equipment (2).

5. Method according to any one of the preceding claims, wherein the method further comprises a recommendation step wherein a relevance index is calculated for the at least one valid hypothesis, said relevance index being calculated by a recommendation algorithm and then displayed on the display (8).

6. Method according to claim 5, wherein during the recommendation step, a recommendation plan is generated from a fourth model distinct from the first, second and third models and then displayed on the display.

7. Method according to any one of the preceding claims, wherein the method further comprises sending a control command to the piece of equipment (2) according to the at least one valid hypothesis.

8. Method according to any one of the preceding claims, wherein the piece of equipment (2) is an autonomous vehicle and the malfunction is a deviation of a physical parameter associated with the vehicle, such as speed or heading.

9. Computer program including software instructions which, when executed by a computer, implement a method for diagnosing a malfunction of a piece of equipment (2) according to any one of claims 1 to 8.

10. Electronic diagnostic device (6) for a piece of equipment (2) malfunction comprising:
- an acquisition module (41) configured to acquire an input data, said input data comprising information relating to the malfunction of the piece of equipment (2),
- a first application module (42) configured to apply a first model to the input data to obtain at least one hypothesis including a solution of the malfunction, said first model being trained to determine at least one hypothesis about the malfunction based on such input data,
- a second application module (43) configured to apply a second model to the at least one hypothesis to obtain a plurality of retrieval facts from a knowledge base containing historical data about the malfunction of the piece of equipment (2),
- a determination module (44) configured to determine at least one valid hypothesis by application of a third model to the at least one hypothesis and the retrieval facts, said third model being trained to determine whether a hypothesis is valid,
- a sending module (45) configured to send a display control to a display (8) for displaying the at least one valid hypothesis for the diagnosis of the malfunction of the piece of equipment (2) by an operator.

## Amended claims

### Amended claims in accordance with Rule 137(2) EPC.

1. Method for diagnosing a malfunction of a piece of equipment (2), the method being implemented by an electronic diagnostic device (6) and comprising:
- acquisition (100) of an input data, said input data comprising information relating to the malfunction of the piece of equipment (2),
- applying (200) a first model to the input data to obtain at least one hypothesis including a solution of the malfunction, said first model being trained to determine at least one hypothesis about the malfunction based on such input data,
- applying (300) a second model to the at least one hypothesis to obtain a plurality of retrieval facts from a knowledge base containing historical data about the malfunction of the piece of equipment (2),
- determining (400) at least one valid hypothesis by application of a third model to the at least one hypothesis and the retrieval facts, said third model being trained to determine whether a hypothesis is valid,
- sending (500) a display control to a display (8) for displaying the at least one valid hypothesis for the diagnosis of the malfunction of the piece of equipment (2) by an operator;
**characterized in that** the first model uses the knowledge base to provide the at least one hypothesis when the acquired input data is similar to a historical input data stored in the knowledge base.

2. Method according to claim 1, wherein the at least one hypothesis includes information about the piece of equipment (2) and/or the malfunction.

3. Method according to any one of the preceding claims, wherein the input data include measurements made by a sensor (4), said sensor (4) being configured to measure a physical variable associated with the piece of equipment (2).

4. Method according to any one of the preceding claims, wherein the method further comprises a recommendation step wherein a relevance index is calculated for the at least one valid hypothesis, said relevance index being calculated by a recommendation algorithm and then displayed on the display (8).

5. Method according to claim 4, wherein during the recommendation step, a recommendation plan is generated from a fourth model distinct from the first, second and third models and then displayed on the display.

6. Method according to any one of the preceding claims, wherein the method further comprises sending a control command to the piece of equipment (2) according to the at least one valid hypothesis.

7. Method according to any one of the preceding claims, wherein the piece of equipment (2) is an autonomous vehicle and the malfunction is a deviation of a physical parameter associated with the vehicle, such as speed or heading.

8. Computer program including software instructions which, when executed by a computer, implement a method for diagnosing a malfunction of a piece of equipment (2) according to any one of claims 1 to 7.

9. Electronic diagnostic device (6) for a piece of equipment (2) malfunction comprising:
- an acquisition module (41) configured to acquire an input data, said input data comprising information relating to the malfunction of the piece of equipment (2),
- a first application module (42) configured to apply a first model to the input data to obtain at least one hypothesis including a solution of the malfunction, said first model being trained to determine at least one hypothesis about the malfunction based on such input data,
- a second application module (43) configured to apply a second model to the at least one hypothesis to obtain a plurality of retrieval facts from a knowledge base containing historical data about the malfunction of the piece of equipment (2),
- a determination module (44) configured to determine at least one valid hypothesis by application of a third model to the at least one hypothesis and the retrieval facts, said third model being trained to determine whether a hypothesis is valid,
- a sending module (45) configured to send a display control to a display (8) for displaying the at least one valid hypothesis for the diagnosis of the malfunction of the piece of equipment (2) by an operator ;
**characterized in that** the first model uses the knowledge base to provide the at least one hypothesis when the acquired input data is similar to a historical input data stored in the knowledge base.
